# EUROPÄISCHE PATENTSCHRIFT

(11) **EP 2 642 147 B1**
(45) Veröffentlichungstag und Bekanntmachung des Hinweises auf die Patenterteilung: **04.01.2017**
(21) Anmeldenummer: 13001143.0
(22) Anmeldetag: 07.03.2013
(51) Int. Cl.: F16D 13/58

(54) **Reibungskupplung**
Friction coupling
Embrayage à friction

(30) Priorität: 23.03.2012 DE 102012204692
(43) Veröffentlichungstag der Anmeldung: 25.09.2013
(73) Patentinhaber: Schaeffler Technologies AG & Co. KG, 91074 Herzogenaurach (DE)
(72) Erfinder: Finkenzeller, Marc, 77723 Gengenbach (DE); Schneider, Michael, 76534 Baden-Baden (DE)

(56) Entgegenhaltungen:
- EP-A2- 2 249 054
- DE-A1- 10 322 783
- GB-A- 2 307 957

## Beschreibung

Die Erfindung betrifft eine Reibungskupplung, die insbesondere als Anfahrkupplung in einem Antriebsstrang eines Kraftfahrzeugs verwendet werden kann und mit deren Hilfe ein Drehmoment von einer Eingangswelle, beispielsweise einer Kurbelwelle eines Motors, an einer Ausgangswelle, beispielsweise einer Eingangswelle eines Getriebes, weitergeleitet werden kann.

In einer Anfahrkupplung, wie beispielsweise aus der DE 197 46 281 A1 bekannt, kann über ein um eine Drehachse drehbares Schwungrad ein von einem Kraftfahrzeugmotor erzeugtes Drehmoment übertragen werden. Mit dem Schwungrad ist eine Anpressplatte zur Weiterleitung des Drehmoments verbunden, die das Drehmoment dann über einen Reibbelag an eine Kupplungsscheibe reibschlüssig übertragen kann.

Aufgrund von axialen Schwingungen in der Kurbelwelle kann es zu einer Relativbewegung zwischen der Kupplung und einem Ausrücklager kommen, insbesondere bei Kupplungen mit einer weggesteuerten Verschleißnachstellung, wodurch die Anpresskraft der Kupplung und somit das übertragbare Drehmoment schwanken kann. Solche Drehmomentschwankungen treten insbesondere in der Schlupfphase der Kupplung - also, vor allem beim Anfahrvorgang - auf und erzeugen Rattergeräusche, nämlich das sogenannte Anfahrrattern.

Aus der EP 2 249 054 A2 ist eine Reibungskupplung bekannt die mit einer Dämpfungseinrichtung ausgestattet ist.

Es besteht daher ein Bedürfnis, solche Rattergeräusche zu verringern, insbesondere bei Kupplungen mit wegbasierter Verschleißnachstellung, und dabei die Drehmomentübertragung und den Anfahrkomfort beim Schließen der Kupplung zu erhöhen. Eine Aufgabe der Erfindung ist es daher, eine Reibungskupplung für einen Antriebsstrang eines Fahrzeugs zu schaffen, mit dessen Hilfe eine verbesserte Drehmomentübertragung beim Schließen der Kupplung ermöglicht wird und weniger Anfahrrattern auftritt, ohne Anfahrkomfort signifikant zu reduzieren.

Die Lösung der Aufgabe erfolgt erfindungsgemäß durch eine Reibungskupplung für einen Antriebsstrang eines Kraftfahrzeugs mit den Merkmalen des Anspruchs 1. Bevorzugte Ausgestaltungen der Erfindung sind in den Unteransprüchen angegeben.

Erfindungsgemäß ist eine Reibungskupplung für einen Antriebsstrang eines Kraftfahrzeugs vorgesehen, mit einer Anpressplatte, die drehfest, jedoch axial begrenzt verlagerbar mit einem Kupplungsgehäuse verbunden ist, einer vorzugsweise als Tellerfeder ausgebildeten Hebelfeder zur Kraftbeaufschlagung der Anpressplatte in axialer Richtung, um eine Kupplungsscheibe zwischen der Anpressplatte und einer Gegenplatte einzuklemmen und einer Dämpfungseinrichtung mit mindestens einem Reibelement zum Dämpfen von Axialschwingungen der Anpressplatte und/oder der Hebelfeder gegenüber dem Gehäuse. Dabei weist das mindestens eine Reibelement mindestens einen Kontaktbereich auf, der nur über einen Teil a des Hebelwegs der Hebelfeder mit der Anpressplatte und/oder mit der Hebelfeder und/oder mit dem Gehäuse in Wirkverbindung steht. Durch Betätigung der Hebelfeder entlang des Hebelwegs verringert sich die besagte Kraftbeaufschlagung und die Kupplung kann ausrücken/trennen. Ist das mindestens eine Reibelement mit dem Gehäuse, insbesondere mit dem Gehäusedeckel, verbunden, so ist die Wirkverbindung eine Wirkverbindung zwischen Kontaktbereich und Anpressplatte und/oder Hebelfeder. Ist das mindestens eine Reibelement hingegen mit der Anpressplatte und/oder der Hebelfeder verbunden, so ist die Wirkverbindung eine Wirkverbindung zwischen Kontaktbereich und Gehäuse, insbesondere Gehäusedeckel. Durch die Ausgestaltung und Anordnung des Reibelements, insbesondere des mindestens einen Kontaktbereichs des Reibelements, und des Gehäuses oder der Hebelfeder beziehungsweise der Anpressplatte wird dafür gesorgt, dass besagter Reibbereich mit der dem Gehäuse, der Anpressplatte und/oder mit der Hebelfeder nur über einen Teil des Hebelwegs wirkungsmäßig im Eingriff steht. Der wirkungsmäßige Eingriff erfolgt insbesondere über einen Reibschluss. Es kommt dadurch zu einem erhöhten Reibwert, der die Hysterese der Ausrückkraftkennlinie erhöht. Diese Erhöhung der Hysterese erfolgt erfindungsgemäß jedoch nur über einen Teil des Hebelwegs, nämlich den besagten Teil a des Hebelwegs bzw. des Ausrückwegs. Die Wirkverbindung basiert auf Kraft- bzw. Reibschluss.

Die Reibungskupplung ist bevorzugt als Anfahrkupplung zum Weiterleiten eines Drehmoments von einer Kurbelwelle eines Motors des Kraftfahrzeugs an einer Eingangswelle eines Getriebes des Kraftfahrzeugs ausgebildet. Durch das mindestens eine Reibelement der Dämpfungseinrichtung kann die Hysterese der Kupplung, insbesondere die Ausrückkrafthysterese, in einem vorbestimmten Bereich erhöht und somit das Anfahrrattern reduziert oder unterdrückt werden.

Vorzugsweise weist die Dämpfungseinrichtung mehrere der Reibelemente auf und diese können im Wesentlichen gleichmäßig um eine Drehachse der Kupplung verteilt sein, um ihre Auswirkung auf die Hysterese der Kupplung auch weitestgehend gleichmäßig zu verteilen.

In vielen vorteilhaften Ausgestaltungen der Erfindung ist das mindestens eine Reibelement mit dem Gehäuse, insbesondere mit dem Gehäusedeckel, verbunden und es kommt über den Teil a des Hebelwegs der Hebelfeder zu einer Wirkverbindung zwischen Kontaktbereich und Anpressplatte und/oder Hebelfeder. Besonders Vorteilhaft ist die Alternative, bei der es über den Teil a des Hebelwegs der Hebelfeder zu einer Wirkverbindung zwischen dem Kontaktbereich und der Hebelfeder kommt.

Gemäß einer bevorzugten Ausgestaltung der Erfindung ist das mindestens eine Reibelement dazu eingerichtet, in seinem Kontaktbereich mit Vorspannung an der Anpressplatte und/oder an der Hebelfeder und/oder an dem Gehäuse anzuliegen und sich ab einer vorbestimmten Position auf dem Hebel- oder Ausrückweg (vorzugsweise am Ende des vorgenannten Teils a des Hebelwegs) von der Anpressplatte und/oder der Hebelfeder zu lösen bzw. zu entfernen. Mit anderen Worten ist also mit Vorteil vorgesehen, dass das mindestens eine Reibelement mit dem Kontaktbereich mit Vorspannung an der Anpressplatte und/oder an der Hebelfeder und/oder am Gehäuse anliegt und sich ab einer vorbestimmten Position auf dem Hebel- beziehungsweise Ausrückweg von der Anpressplatte und/oder von der Hebelfeder löst bzw. entfernt. Somit folgt entlang des Hebelwegs beim Ausrücken auf den erwähnten Teil a des Hebelwegs noch ein weiterer Teil ohne Wirkverbindung zwischen dem Kontaktbereich des Reibelements und der Anpressplatte und/oder der Hebelfeder. Die vorbestimmte Position ist dabei am Ende des einen Teils a des Hebelwegs.

Mindestens eine Reibelement ist als Bolzen und/oder Lasche ausgebildet und greift zwischen zwei Tellerfederzungen der Tellerfeder hinein, wobei der mindestens eine Kontaktbereich an den Flanken des Bolzens oder der Lasche ausgebildet ist. Der mindestens eine Bolzen und/oder die mindestens eine Lasche greift/greifen dabei fingerartig in den Zwischenraum oder die Zwischenräume zwischen den Tellerfederzungen der als Tellerfeder ausgebildeten Hebelfeder.

Gemäß einer bevorzugten Ausgestaltung der Erfindung ist vorgesehen, dass sich die Kontur des als Bolzen und/oder Lasche ausgebildeten Reibelements in mindestens einem Bereich seiner Längsachse verjüngt. An der verjüngten Stelle ist die Kontur schmaler als der Abstand zwischen den entsprechenden Tellerfederzungen.

Gemäß einer weiteren bevorzugten Ausgestaltung der Erfindung greift das als Bolzen und/oder Lasche ausgebildete Reibelement nur über den einen Teil a des Hebelwegs in den Zwischenraum zwischen die beiden Tellerfederzungen ein. Auf dem anschließenden Teil des Hebelwegs löst sich das mindestens eine Reibelement von der Anpressplatte und/oder von der Hebelfeder.

Bevorzugt ist das Reibelement federnd ausgebildet. Ist das Reibelement beispielsweise als Lasche oder Bügel ausgebildet, so ist die federnde Ausbildung eine biegefedernde Ausbildung des Reibelements.

Gemäß einer alternativen aber ebenfalls bevorzugten Ausführungsform der Erfindung ist das das mindestens eine Reibelement eingerichtet, über den Teil a des Hebelwegs vorgespannt axial auf die Hebelfeder zu drücken. Mit anderen Worten drückt das mindestens eine Reibelement über den Teil a des Hebelwegs vorgespannt axial auf die Hebelfeder.

In einer bevorzugten Ausführungsform der Erfindung ist das mindestens eine Reibelement der Dämpfungseinrichtung im Kontaktbereich bügelförmig oder wellenförmig ausgebildet.

Schließlich ist mit Vorteil vorgesehen, dass das mindestens eine Reibelement im Kontaktbereich eine behandelte Oberfläche aufweist, vorzugsweise behandelt durch Beschichtung und/oder durch Aufrauen.

Durch relativ einfache konstruktive Maßnahmen kann die Hysterese des erfindungsgemäßen Kupplungssystems, insbesondere die Ausrückkrafthysterese, erhöht werden und durch diese gezielte Erhöhung der Hysterese des Kupplungssystems (also, die höhere Dämpfung) können die Drehmomentschwankungen reduziert und somit die Rattergeräusche eliminiert werden.

Die Hysterese kann grundsätzlich auch durch Steigerung des Reibwerts an den Kontaktstellen Anpressplatte-Tellerfeder, Tellerfeder-Drahtring, Tellerfeder-Zentrierbolzen/Zentrierlasche, Tellerfeder-Ausrücklager erhöht werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittdarstellung eines Teils einer Reibungskupplung gemäß einem ersten Ausführungsbeispiel der Erfindung mit einem als Lasche ausgebildeten Reibelement zwischen dem Gehäusedeckel und der als Tellerfeder ausgebildeten Hebelfeder,
- Fig. 2:: eine schematische Schnittdarstellung eines Teils der Reibungskupplung gemäß einem zweiten Ausführungsbeispiel der Erfindung mit einem als Zentrierbolzen ausgebildeten Reibelement zwischen dem Gehäusedeckel und der Tellerfeder,
- Fig. 3:: eine schematische Schnittdarstellung eines Teils einer Reibungskupplung gemäß einem dritten Ausführungsbeispiel der Erfindung mit einem gegenüber der Hebelfeder vorgespannten Reibelement und
- Fig. 4:: die resultierende Ausrückkrafthysterese mit der über einem Teil des Hebelwegs verstärkten Hysterese.

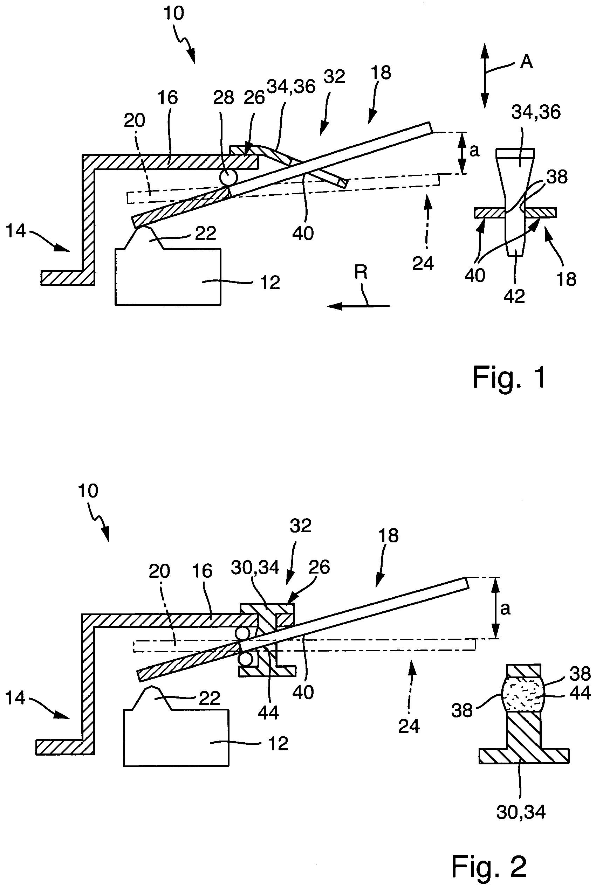

Die Figuren 1 bis 3 zeigen jeweils einen Teil einer Reibungskupplung 10. Die Reibungskupplung 10 ist insbesondere eine Kupplung 10 mit einer weggesteuerten Verschleißnachstellung.

Bezugnehmend zunächst auf die Fig. 1 ist die Reibungskupplung 10 gemäß einem ersten Ausführungsbeispiel in einer Teilansicht gezeigt. Die Reibungskupplung 10, die insbesondere zur Anwendung als Anfahrkupplung in einem Antriebsstrang eines Kraftfahrzeugs ausgebildet ist, weist eine Anpressplatte 12 auf, die drehfest, jedoch begrenzt verlagerbar in axialer Richtung A mit einem Kupplungsgehäuse 14 verbunden ist. Das in Fig. 1 gezeigte Teil des Gehäuses 14 ist ein Gehäusedeckel 16. Weiterhin weist die Kupplung 10 eine als Tellerfeder ausgebildete Hebelfeder 18 auf, welche als Anpressfeder zwischen der Anpressplatte 12 und dem Gehäuse 14 wirksam ist und die Anpressplatte 12 in axialer Richtung A (also in den Figuren 1 bis 3 nach unten) mit Kraft beaufschlagt, um eine Kupplungsscheibe (nicht dargestellt) zwischen der Anpressplatte 12 und einer Gegenplatte (nicht gezeigt) einzuklemmen. Dabei drückt die als Tellerfeder ausgebildete Hebelfeder 18 in deren radial äußerem Bereich 20 gegen einen an der Anpressplatte 12 vorgesehenen Verstellring 22, der gegenüber einem Abstandsbolzen (nicht gezeigt) im Gehäusedeckel 14 liegt. Der radial äußere Bereich 20 der Tellerfeder 18 ist ringförmig ausgebildet und die einzelnen Tellerfederzungen 24 der Tellerfeder 18 erstrecken sich vom ringförmigen äußeren Bereich 20 radial nach innen. Die Hebelfeder 18 kann mittels eines nicht gezeigten Hebels betätigt werden. Wird die Hebelfeder 18 nicht betätigt, so ergibt sich die mit durchgezogenen Linien dargestellte Stellung der Feder 18. In dieser Stellung drückt die Feder 18 die Anpressplatte 12 in axialer Richtung A gegen die (nicht gezeigte) Gegenplatte und verpresst die Kupplungsscheibe. Die Kupplung 10 ist geschlossen.

Bei der Betätigung der Kupplung 10 wird die Feder 18 in deren zentralem Bereich 24 in die axiale Richtung A bewegt, was wiederum mittels einer Schwenklagerung 28 mit einem Drahtring 30 (oder einem (Tellerfeder-)Bolzen 32, wie in Fig. 2 gezeigt) eine axiale Bewegung der Anpressplatte 12 herbeiführt.

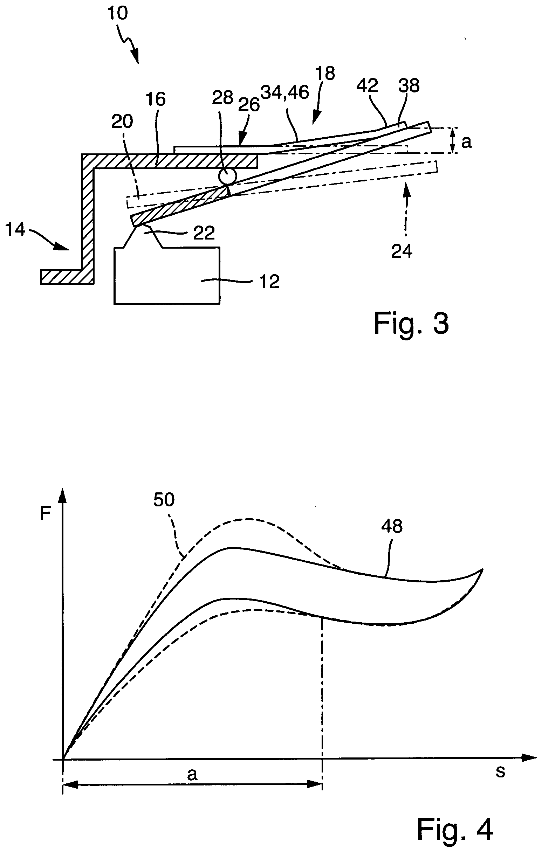

Die Kupplung 10 umfasst ferner eine Dämpfungseinrichtung 32 mit mehreren Reibelementen 34, die im Wesentlichen gleichmäßig um einen äußeren Umfang der Anpressplatte 12 verteilt sind. In der Fig. 1 ist jedoch nur eines dieser Reibelemente 34 dargestellt. Jedes der Reibelemente 34 in diesem Ausführungsbeispiel ist als Lasche 36 (bevorzugt aus Blech), genauer gesagt als Zentrierlasche, ausgebildet, die an ihren Flanken Kontaktbereiche 38 für eine Wirkverbindung mit den Tellerfederzungen 40 der Tellerfeder 18 aufweist. Auf der rechten Seite der Fig. 1 ist diese Situation aus einem um 90° gedrehten Blickwinkel gezeigt. Dabei ist gut erkennbar, wie das als Lasche 36 ausgebildete Reibelement 34 in einem ersten Teil a des Hebelwegs in Wirkverbindung mit den zugehörigen Tellerfederzungen 40 steht. Es kommt zu einem gesteigerten Reibwert zwischen dem am Gehäuse 14 befestigten Reibelement 34 und der Hebelfeder 18 in diesem Teil a des Hebel- bzw. Ausrückwegs. Die in der Fig. 4 dargestellte Ausrückkrafthysterese wird in dem Teil a des dargestellten Ausrückwegs aufgrund dieses gesteigerten Reibwertes zusätzlich erhöht (gestrichelt eingezeichnet).

Wird die Hebelfeder 18 durch Kraftbeaufschlagung entlang des Teils a des Hebelwegs bewegt, so bleibt diese Wirkverbindung bestehen. In gestrichelter Darstellung ist nun die Stellung der Hebelfeder 18 am Ende dieses Teils a des Hebelwegs gezeigt. Im Endbereich 42 des Reibelements 34 wird dieses entlang seiner Längsausrichtung schmaler, sodass die Wirkverbindung ab dieser Stellung gelöst wird. In dem darauf folgenden Teil des Hebelwegs besteht die Wirkverbindung zwischen den Kontaktbereichen 38 der Reibelemente 36 und der Feder 18 nicht mehr, sodass auf diesem Teil des Hebel- bzw. Ausrückwegs kein (gesteigerter) Reibwert zwischen dem am Gehäuse 14 befestigten Reibelement 36 und der Hebelfeder 18 mehr besteht. Die in der Fig. 4 dargestellte Ausrückkrafthysterese wird im weiteren Teil des Hebelwegs nicht mehr zusätzlich erhöht.

Alternativ zur Ausbildung des Reibelements 34 als (Feder-)Lasche 36 kann das Reibelement 34 auch als bauchiger Teller-/Hebelfederbolzen 30 ausgebildet sein, dessen bauchigen Abschnitt 44 nur in einem beschränkten Kippbereich der Tellerfeder/Hebelfeder 18 mit der Teller-feder/Hebelfeder 18 eine erhöhte Reibung aufweist.

Mit Bezug nun auf die Figur 2 ist eine Reibungskupplung 10 nach einem zweiten Ausführungsbeispiel in Teilansicht schematisch gezeigt. Da dieses Ausführungsbeispiel im Wesentlichen dem der Figur 1 entspricht, soll hier nur auf die Unterschiede eingegangen werden.

Die Ausführungsform der Fig. 2 unterscheidet sich durch den Aufbau der Dämpfungseinrichtung 32 von der Ausführungsform der Fig. 1. Auch die in Fig. 2 gezeigte Dämpfungseinrichtung 32 weist mindestens ein Reibelement 34 auf. Dabei ist das Reibelement 34 jedoch als der Tellerfederbolzen 32 zum zentrieren der Tellerfeder 18 ausgebildet. Der Bolzen 32 ist in dem Abschnitt 44 bauchig ausgebildet. Dieser bauchige Abschnitt 44 bildet die Kontaktbereiche 38 des Reibelements 34. Auf der rechten Seite der Fig. 2 ist der bauchige Abschnitt 44 am Bolzen 30 im Detail gezeigt.

Bei der Betätigung der Kupplung 10 wird die Feder 18 in deren zentralem Bereich 24 in die axiale Richtung A bewegt, was wiederum mittels einer Schwenklagerung 28 mit einem Drahtring 30 (oder einem (Tellerfeder-)Bolzen 32, wie in Fig. 2 gezeigt) eine axiale Bewegung der Anpressplatte 12 herbeiführt.

Jedes der Reibelemente 34 in diesem Ausführungsbeispiel dient als Zentrierbolzen 30. Dabei ist gut erkennbar, wie das als Bolzen 30 ausgebildete Reibelement 34 in dem ersten Teil a des Hebelwegs mittels seines bauchigen Abschnitts 44 in Wirkverbindung mit den zugehörigen Tellerfederzungen 40 steht. Es kommt zu einem gesteigerten Reibwert zwischen dem am Gehäuse 14 befestigten Reibelement 34 und der Hebelfeder 18 in diesem Teil a des Hebel- bzw. Ausrückwegs. Die in der Fig. 4 dargestellte Ausrückkrafthysterese wird in dem Teil a des dargestellten Ausrückwegs aufgrund dieses gesteigerten Reibwertes zusätzlich erhöht (gestrichelt eingezeichnet).

Wird die Hebelfeder 18 durch Kraftbeaufschlagung entlang eines Teils a des Hebelwegs bewegt, so bleibt diese Wirkverbindung. In gestrichelter Darstellung ist nun die Stellung der Hebelfeder 18 am Ende dieses Teils a des Hebelwegs gezeigt. Im weiteren Verlauf des Bolzens 30 wird dieses in seiner Längsausrichtung schmaler, sodass die Wirkverbindung ab einem Punkt gelöst wird. In dem darauf folgenden Teil des Hebelwegs besteht die Wirkverbindung zwischen den Kontaktbereichen 38 der Reibelemente 36 (also der Bolzen 30) und der Feder 18 nicht mehr, sodass auf diesem Teil des Hebel- bzw. Ausrückwegs kein (gesteigerter) Reibwert zwischen dem am Gehäuse 14 befestigten Reibelement 36 und der Hebelfeder 18 mehr besteht. Die in der Fig. 4 dargestellte Ausrückkrafthysterese wird im weiteren Teil des Hebelwegs nicht mehr zusätzlich erhöht.

Mit Bezug nun auf die Fig. 3 ist eine Reibungskupplung 10 nach einem dritten Ausführungsbeispiel in Teilansicht schematisch gezeigt. Da dieses Ausführungsbeispiel im Wesentlichen denen der Figuren 1 und 2 entspricht, soll hier nur auf die Unterschiede eingegangen werden.

Die Ausführungsform der Fig. 3 unterscheidet sich durch den Aufbau der Dämpfungseinrichtung 32 von der Ausführungsform der Fig. 1. Auch die in Fig. 3 gezeigte Dämpfungseinrichtung 32 weist mindestens ein Reibelement 34 auf. Dabei ist das Reibelement 34 jedoch als ein Federbügel 46 ausgebildet, der federnd ausgebildet ist und über den Teil a des Hebelwegs vorgespannt axial auf die Hebelfeder 18 drückt. Dabei liegt der Kontaktbereich 38 dieses als Federbügel 46 ausgebildeten Reibelements 34 im Teil a des Hebelwegs mit Vorspannung an der Hebelfeder 18 an und löst sich ab der Endposition dieses Teils a des Hebelwegs (beziehungsweise Ausrückwegs) von der Hebelfeder 18. Auch hier wird die in der Fig. 4 dargestellte Ausrückkrafthysterese in dem Teil a des dargestellten Ausrückwegs aufgrund dieses gesteigerten Reibwertes zusätzlich erhöht (in Fig. 4 gestrichelt eingezeichnet) während der darauf folgende Teil des Hebel- oder Ausrückwegs s nicht zusätzlich erhöht wird.

Die Figur 4 zeigt -wie gesagt- die resultierende Ausrückkrafthysterese. Dabei sind zwei Ausrückkraftkennlinien 48 (durchgezogene Linie) und 50 (gestrichelte Linie) als Graphen in einer Kraft (F)-Weg(s)-Darstellung dargestellt. Die Ausrückkraftkennlinie 48 zeigt die Situation ohne Dämpfungseinrichtung 32. Es ergibt sich eine Hysterese mit charakteristischer Öffnung über dem Hebel- bzw. Ausrückweg s. Durch den gesteigerten Reibwert an den Kontaktstellen Anpressplatte-Tellerfeder, Tellerfeder-Drahtring, Tellerfeder-Zentrierbolzen/Zentrierlasche und/oder Tellerfeder-Ausrücklager wird die Öffnung der Hysterese im Teil a des Hebel- bzw. Ausrückwegs s erhöht (gestrichelt eingezeichnete Ausrückkraftkennlinien 50). Im weiteren Teil des Hebel- bzw. Ausrückwegs s fallen die beiden Kennlinien 48, 50 aufeinander.

Das mindestens eine Reibelement 34 weist vorteilhafterweise eine reibwertsteigernde Beschichtung (z.B. Polyamid) und/oder eine aufgeraute Oberfläche (z.B. durch Strahlen) auf.

Alternativ oder zusätzlich kann in den Kontaktbereichen 38 auf den Einsatz von Schmiermitteln verzichtet werden. Die Reibelemente 34 können wellenförmig oder bügelförmig ausgebildet sein. Ebenso ist es möglich, die Tellerfeder 18 mehrlagig auszubilden.

Die beschriebene Modulation der Hysterese kann sowohl bei einfachen Kupplungen 10 als auch bei Kupplungen mit Verschleißnachstellung mittels einer solchen Dämpfungseinrichtung 32 mit Reibelementen 34 erreicht werden. Dazu sind die Reibelemente 34 derart ausgebildet und/oder angeordnet, dass der Anstieg der Hysterese nur in einem begrenzten Ausrückbereich (Teil a) erfolgt. Insbesondere erfolgt nach diesem Ausrückbereich eine Aufhebung des Reibschlusses (als Wirkverbindung) zwischen dem jeweiligen Reibelement 34 und der Tellerfeder/Hebelfeder 18.

### Bezugszeichenliste

- 10: Reibungskupplung
- 12: Anpressplatte
- 14: Kupplungsgehäuse
- 16: Gehäusedeckel
- 18: Hebelfeder
- 20: Radial äußerer Bereich der Tellerfeder
- 22: Verstellring
- 24: Zentraler Bereich der Tellerfeder
- 26: Schwenklagerung
- 28: Drahtring
- 30: Bolzen
- 32: Dämpfungseinrichtung
- 34: Reibelement
- 36: Lasche
- 38: Kontaktbereich des Reibelements
- 40: Tellerfederzunge
- 42: Endbereich des Reibelements
- 44: Abschnitt des Bolzens
- 46: Federbügel
- 48: Ausrückkraftkennlinie
- 50: Ausrückkraftkennlinien
- a: Teil des Hebel- bzw. Ausrückwegs
- A: Axiale Richtung
- R: Radiale Richtung

## Patentansprüche

1. Reibungskupplung (10) für einen Antriebsstrang eines Kraftfahrzeugs, mit
einer Anpressplatte (12), die drehfest, jedoch axial begrenzt verlagerbar mit einem Kupplungsgehäuse (14), insbesondere einem Gehäusedeckel (16), verbunden ist, einer Hebelfeder (18) zur Kraftbeaufschlagung der Anpressplatte (12) in axialer Richtung (A), um eine Kupplungsscheibe zwischen der Anpressplatte (12) und einer Gegenplatte einzuklemmen, und
einer Dämpfungseinrichtung (32) mit mindestens einem Reibelement (34) zum Dämpfen von Axialschwingungen der Anpressplatte (12) und/oder der Hebelfeder (18) gegenüber dem Gehäuse (16),
wobei das mindestens eine Reibelement (34) mindestens einen Kontaktbereich (38) aufweist, der nur über einen Teil (a) des Hebelwegs der Hebelfeder (18) in Wirkverbindung mit der Anpressplatte (12) und/oder mit der Hebelfeder (18) und/oder mit dem Gehäuse (16) steht, **dadurch gekennzeichnet, dass**
das mindestens eine Reibelement (34) als Bolzen (30) und/oder Lasche (36) ausgebildet ist und zwischen zwei Zungen (40) der Hebelfeder (18) eingreift, wobei der mindestens eine Kontaktbereich (38) an den Flanken des Bolzens (30) und/oder der Lasche (36) ausgebildet ist.

2. Reibungskupplung nach Anspruch 1, wobei das mindestens eine Reibelement (34) dazu eingerichtet ist, in seinem Kontaktbereich (38) mit Vorspannung an der Anpressplatte (12) und/oder der Hebelfeder (18) und/oder dem Gehäuse (16) anzuliegen und sich ab einer vorbestimmten Position auf dem Hebelweg von der Anpressplatte (12) und/oder der Hebelfeder (18) und/oder dem Gehäuse (16) zu lösen.

3. Reibungskupplung nach Anspruch 1 oder 2, wobei sich die Kontur des als Bolzen (30) und/oder Lasche (36) ausgebildeten Reibelements (34) in mindestens einem Bereich seiner Längsachse verjüngt.

4. Reibungskupplung nach einem der Ansprüche 1 bis 3, wobei das als Bolzen (30) und/oder Lasche (36) ausgebildete Reibelement (34) nur über den einen Teil (a) des Hebelwegs in den Zwischenraum zwischen die beiden Zungen (40) eingreift.

5. Reibungskupplung nach einem der Ansprüche 1 bis 4, wobei das Reibelement (34) federnd ausgebildet ist.

6. Reibungskupplung nach einem der Ansprüche 1 bis 5, wobei das mindestens eine Reibelement (34) über den Teil (a) des Hebelwegs vorgespannt axial auf die Hebelfeder (18) drückt.

7. Reibungskupplung nach einem der Ansprüche 1 bis 6, wobei das mindestens eine Reibelement (34) der Dämpfungseinrichtung (32) im Kontaktbereich (38) bügelförmig oder wellenförmig ausgebildet ist.

8. Reibungskupplung nach einem der Ansprüche 1 bis 7, wobei das mindestens eine Reibelement (34) im Kontaktbereich (38) eine behandelte Oberfläche aufweist, vorzugsweise behandelt durch Beschichtung und/oder durch Aufrauen.

## Claims

1. Friction clutch (10) for a drive train of a motor vehicle, having a pressure plate (12) which is connected to a clutch housing (14), in particular a housing cover (16), fixedly in terms of rotation, but displaceably axially to a limited extent, a lever spring (18) for loading the pressure plate (12) with force in the axial direction (A), in order to clamp a clutch plate between the pressure plate (12) and a counter plate, and
a damping device (32) with at least one friction element (34) for damping axial vibrations of the pressure plate (12) and/or the lever spring (18) with respect to the housing (16),
the at least one friction element (34) having at least one contact region (38) which is operatively connected to the pressure plate (12) and/or to the lever spring (18) and/or to the housing (16) only over a part (a) of the lever travel of the lever spring (18), **characterized in that**
the at least one friction element (34) is configured as a pin (30) and/or bracket (36) and engages between two tongues (40) of the lever spring (18), the at least one contact region (38) being configured on the flanks of the pin (30) and/or the bracket (36).

2. Friction clutch according to Claim 1, the at least one friction element (34) being set up to bear with prestress in its contact region (38) against the pressure plate (12) and/or the lever spring (18) and/or the housing (16) and to be released from the pressure plate (12) and/or the lever spring (18) and/or the housing (16) from a predefined position on the lever travel.

3. Friction clutch according to Claim 1 or 2, the contour of the friction element (34) which is configured as a pin (30) and/or bracket (36) tapering in at least one region of its longitudinal axis.

4. Friction clutch according to one of Claims 1 to 3, the friction element (34) which is configured as a pin (30) and/or bracket (36) engaging into the intermediate space between the two tongues (40) only over the one part (a) of the lever travel.

5. Friction clutch according to one of Claims 1 to 4, the friction element (34) being of sprung configuration.

6. Friction clutch according to one of Claims 1 to 5, the at least one friction element (34) pressing axially on the lever spring (18) in a prestressed manner over the part (a) of the lever travel.

7. Friction clutch according to one of Claims 1 to 6, the at least one friction element (34) of the damping device (32) being of groove-shaped or wave-shaped configuration in the contact region (38).

8. Friction clutch according to one of Claims 1 to 7, the at least one friction element (34) having a treated surface in the contact region (38), preferably treated by way of coating and/or by way of roughening.

## Revendications

1. Embrayage à friction (10) pour une chaîne cinématique d'un véhicule automobile, comprenant une plaque de pressage (12) qui est connectée de manière solidaire en rotation mais de manière déplaçable axialement dans une mesure limitée à un boîtier d'embrayage (14), en particulier un couvercle de boîtier (16),
un ressort de levier (18) pour la sollicitation par force de la plaque de pressage (12) dans la direction axiale (A), de manière à serrer un disque d'embrayage entre la plaque de pressage (12) et une plaque conjuguée, et
un dispositif d'amortissement (32) comprenant au moins un élément de friction (34) pour l'amortissement des oscillations axiales de la plaque de pressage (12) et/ou du ressort de levier (18) par rapport au boîtier (16),
l'au moins un élément de friction (34) présentant au moins une région de contact (38) qui est en liaison fonctionnelle uniquement sur une partie (a) de la course de levier du ressort de levier (18) avec la plaque de pressage (12) et/ou avec le ressort de levier (18) et/ou avec le boîtier (16), **caractérisé en ce que**
l'au moins un élément de friction (34) est réalisé sous forme de boulon (30) et/ou de patte (36) et vient en prise entre deux langues (40) du ressort de levier (18), l'au moins une région de contact (38) étant réalisée au niveau des flancs du boulon (30) et/ou de la patte (36).

2. Embrayage à friction selon la revendication 1, dans lequel l'au moins un élément de friction (34) est prévu pour s'appliquer dans sa région de contact (38) avec précontrainte contre la plaque de pressage (12) et/ou le ressort de levier (18) et/ou le boîtier (16) et pour se détacher, à partir d'une position prédéterminée sur la course de levier, de la plaque de pressage (12) et/ou du ressort de levier (18) et/ou du boîtier (16).

3. Embrayage à friction selon la revendication 1 ou 2, dans lequel le contour de l'élément de friction (34) réalisé sous forme de boulon (30) et/ou de patte (36) se rétrécit dans au moins une région de son axe longitudinal.

4. Embrayage à friction selon l'une quelconque des revendications 1 à 3, dans lequel l'élément de friction (34) réalisé sous forme de boulon (30) et/ou de patte (36) s'engage seulement sur une partie (a) de la course de levier dans l'espace intermédiaire entre les deux langues (40).

5. Embrayage à friction selon l'une quelconque des revendications 1 à 4, dans lequel l'élément de friction (34) est réalisé de manière élastique.

6. Embrayage à friction selon l'une quelconque des revendications 1 à 5, dans lequel l'au moins un élément de friction (34) presse axialement sur le ressort de levier (18) de manière précontrainte sur la partie (a) de la course de levier.

7. Embrayage à friction selon l'une quelconque des revendications 1 à 6, dans lequel l'au moins un élément de friction (34) du dispositif d'amortissement (32) est réalisé en forme d'étrier ou en forme ondulée dans la région de contact (38).

8. Embrayage à friction selon l'une quelconque des revendications 1 à 7, dans lequel l'au moins un élément de friction (34) présente dans la région de contact (38) une surface traitée, de préférence traitée par revêtement et/ou par grainage.
